# EUROPEAN PATENT SPECIFICATION

(11) **EP 4 242 263 B1**
(45) Date of publication and mention of the grant of the patent: **01.05.2024**
(21) Application number: 22161305.2
(22) Date of filing: 10.03.2022
(51) Int. Cl.: C08L 67/02

(54) **POLY(BUTYLENE TEREPHTHALATE) BASED COMPOSITION WITH IMPROVED ELECTRICAL TRACKING RESISTANCE**
ZUSAMMENSETZUNG AUF BASIS VON POLY(BUTYLENTEREPHTHALAT) MIT VERBESSERTER ELEKTRISCHER KRIECHSTROMFESTIGKEIT
COMPOSITION À BASE DE POLY(TÉRÉPHTALATE DE BUTYLÈNE) AVEC UNE RÉSISTANCE DE SUIVI ÉLECTRIQUE AMÉLIORÉE

(43) Date of publication of application: 13.09.2023
(73) Proprietor: SABIC Global Technologies, B.V., 4612 PX Bergen op Zoom (NL)
(72) Inventor: van der WEELE, Chris, 6160 GA Geleen (NL)
(74) Representative: Sabic Intellectual Property Group

(56) References cited:
- DE-T5-112006 001 824
- KR-A- 20160 110 160

## Description

### FIELD OF INVENTION

The present invention relates to a poly(butylene terephthalate) based composition, in particular to an electrical tracking resistant poly(butylene terephthalate) based composition, articles formed therefrom, and their methods of manufacture.

### BACKGROUND

Poly(butylene terephthalate) based resin (hereafter also referred to as "PBT resin") is useful in the manufacture of articles and components for a wide range of applications. Because of their broad use, particularly in the electrical and electronic industries, these are required to meet stringent industry standards for good electrical tracking resistance, while at the same time exhibiting good mechanical properties, such as tensile modulus and tensile strength.

Electrical tracking is the formation of conductive pathways on the surface of a polymer under certain conditions and at a certain voltage. Electrical tracking in a polymer can be a source of fire in the articles; therefore resistance to electrical tracking is often an important safety requirement for a material used in certain electrical applications. A common method of reporting the electrical tracking resistance of a polymer is by its comparative tracking index rating (CTI). The CTI rating of plastics indicates how resistant a plastic material is to electrical tracking at certain voltages. CTI ratings range from CTI-0 to CTI-5 with a CTI-0 being the most resistant and CTI-5 being the least resistant.

PBT resins themselves are resins that have a comparative tracking index, based on the IEC 60112 standard that satisfies the highest rank within the standard of 600 V or higher. However, various fillers such as reinforcing fillers, flame retardants and stabilizers are typically used in PBT resins that alter various properties such as the mechanical strength, and depending on the types of fillers used, the tracking resistance can sometimes be impaired. For example, it is known that when glass fibre, which is widely used as a reinforcing filler, is added to a PBT resin, the tracking resistance deteriorates significantly depending on the amount of filler added.

KR20160110160A discloses a composition comprising PWBT, zinc pyrophosphate and glass fibers.

Many studies have been reported on improvement of tracking resistance for PBT based compositions. DE112006001824 discloses a PBT composition having improved electrical properties comprising PBT, a halogen-containing flame retardant, olefin-type resin and glass fibres. The polybutylene terephthalate resin composition described in JPH0959497A contains a large amount of polyamide resin in order to improve the tracking resistance of the PBT composition containing a flame retardant. There is a problem in that mechanical strength such as tensile strength and bending strength tends to be lower than that of polybutylene terephthalate resin while you have the improved CTI.

Thus, for the foregoing reasons, there remains a need in the art for PBT based compositions that have excellent electrical tracking resistance. It would be a further advantage if the compositions could be rendered electrical tracking resistant without a significant detrimental effect on one or more of material cost, processability, and mechanical properties in particular a combination of good melt flow properties, a high heat deflection temperature, a high impact strength and a high tensile strain at break i.e. PBT resin based material with an excellent balance of mechanical properties and tracking resistance.

### SUMMARY OF THE INVENTION

Accordingly, such desired combination of improved electrical tracking resistance, good melt flow properties, a high heat deflection temperature, a high impact strength and a high tensile strain at break are now achieved by the present invention with a thermoplastic polymer composition comprising:
between 54-96 wt.% of poly(butylene terephthalate);
between 0.5-5.0 wt.% of a pyro/polyphosphate selected from metal pyrophosphates, metal polyphosphates, metal acid pyrophosphates, metal acid polyphosphates or a combination thereof;
between 0.5-5.0 wt.% of an alkyl acrylate based copolymer;
between 0.5-5.0 wt.% of polyethylene;
between 2.5-30 wt.% of glass fibres and;
between 0-1.0 wt.% of a mineral filler;
wherein the weight percentages are based on the total weight of the thermoplastic polymer composition.

The thermoplastic polymer composition may comprise 54-96 wt.% of poly(butylene terephthalate), preferably 54-90 wt.%, preferably 54-85 wt.%, more preferably 60-85 wt.% of poly(butylene terephthalate) with regard to the total weight of the thermoplastic polymer composition.

The thermoplastic polymer composition may comprise 0.5-5.0 wt.% of a pyro/polyphosphate, preferably 1.0-5.0 wt.%, preferably 2.0-5.0 wt.%, more preferably 2.5-5.0 wt.% of the pyro/polyphosphate with regard to the total weight of the thermoplastic polymer composition.

The thermoplastic polymer composition may comprise 0.5-5.0 wt.% of an alkyl acrylate based copolymer, preferably 1.0-5.0 wt.%, preferably 2.0-5.0 wt.%, more preferably 2.5-5.0 wt.% of the alkyl acrylate based copolymer with regard to the total weight of the thermoplastic polymer composition.

The thermoplastic polymer composition may comprise 0.5-5.0 wt.% of polyethylene, preferably 1.0 -5.0 wt.%, preferably 1.5-5.0 wt.%, preferably 2.0-5.0 wt.%, more preferably 3.0-5.0 wt.% of polyethylene with regard to the total weight of the thermoplastic polymer composition.

The thermoplastic polymer composition may comprise 2.5- 30 wt.% of glass fibres, preferably 5.0-25 wt.%, preferably 10 -25 wt.%, more preferably 10 -20 wt.% of glass fibres with regard to the total weight of the thermoplastic polymer composition.

In another embodiment of the invention, the thermoplastic polymer composition further comprises 0.1-1.0 wt.% of a mineral filler component selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof, having an average particle size determined as D50 according to ISO 9276-2 (2014) of 500 - 1500 nm with regard to the total weight of the thermoplastic polymer composition.

In another embodiment, the invention is directed to an article selected from electrical and electronic connectors, automotive connectors, battery housings, computer fans, lighting switches, sockets, solar apparatus, electrical junction boxes, electrical vehicle chargers, outdoor electrical enclosures, smart meter enclosures and smart grid power nodes, comprising the thermoplastic polymer composition. The article comprising the thermoplastic polymer composition may be prepared by molding, extruding, or casting the thermoplastic polymer composition.

Other objects, features and advantages of the present invention will become apparent from the detailed description, and examples. It should be understood, however, that the detailed description, and examples, while indicating specific embodiments of the invention, are given by way of illustration only and are not meant to be limiting. Additionally, it is contemplated that changes and modifications within the scope of the invention will become apparent to those skilled in the art from this detailed description. In further embodiments, features from specific embodiments may be combined with features from other embodiments. In further embodiments, additional features may be added to the specific embodiments described herein.

The use of the words "a" or "an" when used in conjunction with the term "comprising," "including," "containing," or "having" in the claims or the specification may mean "one," but it is also consistent with the meaning of "one or more," "at least one," and "one or more than one." The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The process of the present invention can "comprise", "consist essentially of," or "consist of" particular ingredients, components, compositions, etc., disclosed throughout the disclosure.

Any numerical range used throughout this disclosure shall include all values and ranges there between unless specified otherwise. For example, a boiling point range of 50 °C to 100 °C or between 50 °C to 100 °C includes all temperatures and ranges between 50 °C and 100 °C including the temperature of 50 °C and 100 °C.

### DETAILED DESCRIPTION OF THE INVENTION

The present invention is described below in more detail. All embodiments described with respect to one aspect of the present invention are also applicable to the other aspects of the invention, unless otherwise stated.

As stated above, the thermoplastic polymer composition according to the present invention that comprises:
between 54-96 wt.% of poly(butylene terephthalate);
between 0.5-5.0 wt.% of a pyro/polyphosphate selected from metal pyrophosphates, metal polyphosphates, metal acid pyrophosphates, metal acid polyphosphates or a combination thereof;
between 0.5-5.0 wt.% of an alkyl acrylate based copolymer;
between 0.5-5.0 wt.% of polyethylene;
between 2.5-30 wt.% of glass fibres and;
between 0-1.0 wt.% of a mineral filler;

provides a desired combination of improved electrical tracking resistance, good melt flow properties, a high heat deflection temperature, a high impact strength and a high tensile strain at break,
wherein the weight percentages are based on the total weight of the thermoplastic polymer composition.

As stated above, the thermoplastic polymer composition according to the present invention that comprises The Poly(butylene terephthalate) of the polymeric composition is not limited to homo-polybutylene terephthalate, and may contain other dicarboxylic acid units besides the terephthalic acid units, and other diol units besides the 1,4-butanediol units. In such cases, the total of all the dicarboxylic acid units preferably includes at least 70 mol%, and more preferably at least 90 mol%, of terephthalic acid units, and the total of all the diol units preferably includes at least 70 mol%, and more preferably at least 90 mol%, of 1,4-butanediol units.

It is preferred that the poly(butylene terephthalate) has an intrinsic viscosity of ≥ 0.50 and ≤ 2.00 dL/g, for example ≥ 0.70 and ≤ 1.00 dL/g, as determined in accordance with ASTM D2857-95 (2007).

The poly(butylene terephthalate) may comprise different poly(butylene terepthalates) having different product properties. For example, the poly(butylene terephthalate) may comprise a first poly(butylene terephthalate) and a second poly(butylene terephthalate). The poly(butylene terephthalate) may for example be a blend of such first poly(butylene terephthalate) and such second poly(butylene terephthalate). Such a blend may be obtained by melt mixing of a mixture comprising the first poly(butylene terephthalate) and the second poly(butylene terephthalate). Alternatively, such blend may be obtained by mixing granules or powder particles of the first poly(butylene terephthalate) and the second poly(butylene terephthalate) in the solid state.

The first poly(butylene terephthalate) may for example have an intrinsic viscosity of 0.50 - 1.00 dL/g, alternatively 0.70 - 0.80 dL/g. The second poly(butylene terephthalate) may for example have an intrinsic viscosity of 1.00 - 1.50 dL/g, alternatively 1.15 - 1.40 dL/g. Preferably, the first poly(butylene terephthalate) has an intrinsic viscosity of 0.50 - 1.00 dL/g and the second poly(butylene terephthalate) has an intrinsic viscosity of 1.00 - 1.50 dL/g. More preferably, the first poly(butylene terephthalate) has an intrinsic viscosity of 0.70 - 0.80 dL/g and the second poly(butylene terephthalate) has an intrinsic viscosity of 1.15 - 1.40 dL/g.

The use of such a blend of such first poly(butylene terephthalate) and such second poly(butylene terephthalate) allows for the preparation of blends having a desired intrinsic viscosity of the blend.

In the PBT resin, examples of other dicarboxylic acid components (comonomer components) besides the terephthalic acid or ester-forming derivative thereof include C8 to C14 aromatic dicarboxylic acids such as isophthalic acid, phthalic acid, 2,6-naphthalene dicarboxylic acid and 4,4'-dicarboxydiphenyl ether; C4 to C16 alkane dicarboxylic acids such as succinic acid, adipic acid, azelaic acid and sebacic acid; C5 to C10 cycloalkane dicarboxylic acids such as cyclohexane dicarboxylic acid; and ester-forming derivatives (such as C1 to C6 alkyl ester derivatives and acid halides) of these dicarboxylic acid components. These dicarboxylic acid components may be used individually, or a combination of two or more components may be used. Among these dicarboxylic acid components, C8 to C12 aromatic dicarboxylic acids such as isophthalic acid and C6 to C12 alkane dicarboxylic acids such as adipic acid, azelaic acid and sebacic acid are particularly preferable.

In the PBT resin, examples of other glycol components (comonomer components) besides the 1,4-butanediol include C2 to C10 alkylene glycols such as ethylene glycol, propylene glycol, trimethylene glycol, 1,3-butylene glycol, hexamethylene glycol, neopentyl glycol and 1,3-octanediol; polyoxyalkylene glycols such as diethylene glycol, triethylene glycol and dipropylene glycol; alicyclic diols such as cyclohexanedimethanol and hydrogenated bisphenol A; aromatic diols such as bisphenol A and 4,4'-dihydroxybiphenyl; C2 to C4 alkylene oxide adducts of bisphenol A such as ethylene oxide 2-mol adducts of bisphenol A and propylene oxide 3-mol adducts of bisphenol A; and ester-forming derivatives (such as acetylated derivatives) of these glycols. These glycol components may be used individually, or a combination of two or more components may be used.

Among these glycol components, C2 to C6 alkylene glycols such as ethylene glycol and trimethylene glycol, polyoxyalkylene glycols such as diethylene glycol, and alicyclic diols such as cyclohexanedimethanol and the like are particularly preferable.

Examples of comonomer components (other comonomer components) that may be used besides the dicarboxylic acid component and the glycol component include aromatic hydroxycarboxylic acids such as 4-hydroxybenzoic acid, 3-hydroxybenzoic acid, 6-hydroxy-2-naphthoic acid and 4-carboxy-4'-hydroxybiphenyl; aliphatic hydroxycarboxylic acids such as glycolic acid and hydroxycaproic acid; C3 to C12 lactones such as propiolactone, butyrolactone, valerolactone and caprolactones (such as ε-caprolactone); and ester-forming derivatives (such as C1 to C6 alkyl ester derivatives, acid halides and acetylated derivatives) of these comonomer components.

The amount of such poly(butylene terephthalate) copolymer may comprise ≤ 10.0 wt% of polymeric units derived from further monomers, preferably ≤ 5.0 wt%, such as ≥ 0.5 and ≤ 5.0 wt%, with regard to the total weight of the poly(butylene terephthalate).

A combination of a plurality of different PBT resins may be used as the PBT resin. For example, a PBT resin containing other dicarboxylic acids besides the butylene terephthalate units and/or other diol units besides the 1,4-butanediol units may be combined with a homo-PBT resin, or a plurality of PBT resins having different dicarboxylic acid and/or diol components may be combined.

The PBT resin may also contain a resin other than the PBT resin, provided the effects of the present invention are not impaired. For example, another polyester resin such as a polyethylene terephthalate (PET) resin, polypropylene terephthalate (PPT) resin, polybutylene naphthalate (PBN) resin or polyethylene naphthalate (PEN) resin may be used in combination with the PBT resin.

The glass fibres used in the thermoplastic polymer composition according to the present invention may be chopped glass fibres. The glass fibres may for example have an average diameter of 5.0 - 15.0 µm, alternatively 7.5 - 12.5 µm. The glass fibres may for example have an average fibre length of 3.0 - 5.0 mm, preferably 3.5 - 4.5 mm. The glass fibres may for example comprise E-glass in accordance with ASTM D578-98, an alumina-borosilicate glass comprising ≤ 1.0 wt% alkali oxides with regard to the total weight of the glass. The glass fibres further may comprise one or more coatings, such as silane coatings.

Preferably, the glass fibres have an average diameter of 5.0 - 15.0 µm and an average fibre length of 3.0 - 5.0 mm. More preferably, the glass fibres have an average diameter of 7.5 - 12.5 µm and an average fibre length of 3.5 - 4.5 mm. Even more preferably, the glass fibres have an average diameter of 7.5 - 12.5 µm and an average fibre length of 3.5 - 4.5 mm, and comprise alumina-borosilicate glass comprising ≤ 1.0 wt% alkali oxides with regard to the total weight of the glass.

The polyethylene that is used in the thermoplastic polymer composition of the present invention may be one selected from a high-density polyethylene, a linear low-density polyethylene, a low-density polyethylene, or combinations thereof. Such polyethylenes are well known in the art and for example described in 'Handbook of Polyethylene', A. Peacock, Marcel Dekker, New York, 2000.

Such high-density polyethylene may for example have a density of 940 - 970 kg/m³. Such linear low-density polyethylene may for example have a density of 900 - 940 kg/m³, preferably 915 - 939 kg/m³. Such low density polyethylene may for example have a density of 910 - 940 kg/m³, preferably 915 - 930 kg/m³, more preferably 918 - 922 kg/m³. The density of the polyethylenes is determined in accordance with ISO 1183-1 (2012), method A.

It is preferred that the polyethylene is selected from a high-density polyethylene having a density of 940 - 970 kg/m³, a linear low-density polyethylene having a density of 915 - 939 kg/m³, or a low-density polyethylene having a density of 910 - 940 kg/m³, wherein the density is determined in accordance with ISO 1183-1 (2012), method A. It is particularly preferred that the polyethylene is a low-density polyethylene having a density of 918 - 922 kg/m³ as determined in accordance with ISO 1183-1 (2012), method A.

The low-density polyethylene preferably has a zero-shear viscosity as determined using DMS with fit according to the Cross-model of ≥ 10000 Pa·s, more preferably ≥ 15000 Pa·s. The polyethylene may for example have a melt mass-flow rate as determined in accordance with ISO 1133-1 (2011) at a temperature of 190 °C and a load of 2.16 kg of ≥ 10.0 and ≤ 50.0 g/10 min, alternatively ≥ 15.0 and ≤ 30.0 g/10 min, alternatively ≥ 20.0 and ≤ 25.0 g/10 min. The polyethylene may for example have a melt mass-flow rate as determined in accordance with ISO 1133-1 (2011) at a temperature of 190°C and a load of 5.0 kg of ≥ 50.0 and ≤ 100.0 g/10 min, alternatively ≥ 70.0 and ≤ 85.0 g/10 min. Preferably, the polyethylene has a melt mass-flow rate determined at 190 °C under a load of 2.16 kg of ≥ 15.0 and ≤ 30.0 g/10 min, and a melt mass-flow rate determined at 190 °C under a load of 5.0 kg of ≥ 50.0 and ≤ 100.0 g/10 min. Alternatively, the polyethylene may have a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min.

Preferably, the polyethylene is a low-density polyethylene having a density of 918 - 922 kg/m³ as determined in accordance with ISO 1183-1 (2012), method A, having a melt mass-flow rate determined at 190°C under a load of 2.16 kg of ≥ 20.0 and ≤ 25.0 g/10 min, and a melt mass-flow rate determined at 190°C under a load of 5.0 kg of ≥ 70.0 and ≤ 85.0 g/10 min.

Particularly preferable, the thermoplastic polymer composition comprises 1.5 - 5.0 wt%, with regard to the total weight of the thermoplastic polymer composition of polyethylene being a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min.

The use of such polyethylene in the thermoplastic polymer composition of the present invention is understood to contribute to achieving the desired tensile strain at break, the desired impact strength, and the desired heat deflection temperature.

The alkyl acrylate based copolymer used in the thermoplastic polymer composition according to the present invention may be a copolymer formed using ethylene and ethyl acrylate as copolymerization components. The copolymer can be a random, a block or a graft copolymer, for example, the copolymer may have two or more partial structures selected from random structures, block structures and graft structures. There are no particular limitations on the ratio between the ethylene and the ethyl acrylate in the copolymer.

In one of the embodiments, in order to improve the tracking resistance, it is preferable to use an ethylene ethyl acrylate (EEA) copolymer that contains ethylene and ethyl acrylate as the comonomers. However, there may be other comonomer components present, provided those components do not impair the effects of the present embodiment.

The thermoplastic polymer composition according to the present invention may further comprise a mineral filler component selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof. For example, the thermoplastic polymer composition may comprise 0.1 - 1.0 wt.% of mineral filler, preferably 0.1 - 0.8 wt.%, more preferably 0.1 - 0.6 wt.%, more preferably 0.1 - 0.5 wt.% with regard to the total weight of the thermoplastic polymer composition. Such mineral filler may for example have an average particle size determined as D50 according to ISO 9276-2 (2014) of ≤ 3000 nm, such as 500 - 1500 nm.

The thermoplastic polymer composition according to the present invention may comprise 0.5-5 wt.% of a pyro/polyphosphate selected from metal pyrophosphates, metal polyphosphates, metal acid pyrophosphates, metal acid polyphosphates or a combination thereof. Preferably the pyro/polyphosphate has the formula (I) - M^{z}ₓH_{y}PₙO₃ₙ₊₁
wherein M is a metal, x is a number from 1 to 12, y is a number from 0 to 12, n is a number from 2 to 10, z is a number from 1 to 5 and the sum of (xz)+y is equal to n+2. M is preferably a Group IA, IIA, IB or IIB metal and more preferably sodium or potassium.
These compounds include, for example, pyrophosphates of the formula Na₃HP₂O₇; K₂H₂P₂O₇; Na₃H₂P₂O₁₀; KNaH₂P₂O₇ and Na₂H₂P₂O₇ or sodium hexameta phosphate, Na₈P₆O₁₉. Typically, the metal pyro/polyphosphates are hydrates and may be in powder form. Sodium hydrogen pyrophosphate is the most preferred.

In a particular embodiment, the thermoplastic polymer composition according to the present invention comprising the mineral filler component comprises talc. The polymer composition according to the present invention comprises 0.1-1.0 wt.% talc having an average particle size determined as D50 according to ISO 9276-2 (2014) of 500 - 1500 nm, with regard to the total weight of the thermoplastic polymer composition. The use of such talc may further contribute to the desired high heat deflection temperature of the thermoplastic polymer composition.

The invention also encompasses a particular embodiment wherein the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene and;
2.5-30 wt.% of glass fibres;
wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene and;
2.5-30 wt.% of glass fibres;
wherein the weight percentages are based on the total weight of the thermoplastic polymer composition;
wherein the comparative tracking index (CTI) of the thermoplastic polymer composition is 600 V or higher as determined in accordance with ASTM D3638.

In a further embodiment, the thermoplastic polymer composition comprises:
55-96 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene and;
2.5-30 wt.% of glass fibres;
wherein the weight percentages are based on the total weight of the thermoplastic polymer composition.

In a further embodiment, the thermoplastic polymer composition comprises:
55-96 wt.% of poly(butylene terephthalate) comprising 50-80 wt.% of the first poly(butylene terephthalate) having an intrinsic viscosity of 0.5 - 1.0 dL/g and 20-50 wt.% of the second poly(butylene terephthalate) having intrinsic viscosity of 1.0 - 1.5 dL/g, with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene and;
2.5-30 wt.% of glass fibres;
wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the polyethylene is selected from a high-density polyethylene having a density of 940 - 970 kg/m³, a linear low-density polyethylene having a density of 915 - 939 kg/m³, or a low-density polyethylene having a density of 910 - 940 kg/m³, wherein the density is determined in accordance with ISO 1183-1 (2012), method A;
wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the polyethylene is a low-density polyethylene having a density of 915 - 939 kg/m³, preferably from 918 - 922 kg/m³ as determined in accordance with ISO 1183-1 (2012), method A;
wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the polyethylene is a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min; wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the glass fibres have an average fibre diameter of 5.0 - 15.0 µm, and an average fibre length of 3.0 - 5.0 mm;
wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the alkyl acrylate based copolymer is an ethylene ethyl acrylate copolymer;
wherein the weight percentages are based on the total weight of the thermoplastic polymer composition.

In a further embodiment, the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the pyro/polyphosphate is sodium hydrogen pyrophosphate;
wherein the weight percentages are based on the total weight of the thermoplastic polymer composition.

In yet another embodiment, the thermoplastic polymer composition comprises:
54-95.9 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the weight percentages are based on the total weight of the thermoplastic polymer composition.

In yet another embodiment, the thermoplastic polymer composition comprises:
54-95.9 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the mineral filler component is selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof, having an average particle size determined as D50 according to ISO 9276-2 (2014) of 500- 1500 nm;
wherein the weight percentages are based on the total weight of the thermoplastic polymer composition.

In yet another embodiment, the thermoplastic polymer composition comprises:
55-96 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
wherein the polyethylene is a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min;
wherein the weight percentages are based on the total weight of the thermoplastic polymer composition.

In another embodiment, the thermoplastic polymer composition comprises:
54-95.9 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the polyethylene is a low-density polyethylene having a density of 918 - 922 kg/m³ as determined in accordance with ISO 1183-1 (2012), method A, having a melt mass-flow rate determined at 190°C under a load of 2.16 kg of ≥ 20.0 and ≤ 25.0 g/10 min, and a melt mass-flow rate determined at 190°C under a load of 5.0 kg of ≥ 70.0 and ≤ 85.0 g/10 min; wherein the weight percentages are based on the total weight of the thermoplastic polymer composition.

In another embodiment, the thermoplastic polymer composition comprises:
54-95.9 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the polyethylene is a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min; wherein the alkyl acrylate based copolymer is an ethylene ethyl acrylate copolymer;
wherein the weight percentages are based on the total weight of the thermoplastic polymer composition.

In another embodiment, the thermoplastic polymer composition comprises:
54-95.9 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/poly phosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the polyethylene is a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min; wherein the alkyl acrylate based copolymer is an ethylene ethyl acrylate copolymer;
wherein the mineral filler component is selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof, having an average particle size determined as D50 according to ISO 9276-2 (2014) of 500- 1500 nm;
wherein the weight percentages are based on the total weight of the thermoplastic polymer composition.

In another embodiment, the thermoplastic polymer composition comprises:
54-95.9 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the polyethylene is a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min; wherein the alkyl acrylate based copolymer is an ethylene ethyl acrylate copolymer;
wherein the mineral filler component is selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof, having an average particle size determined as D50 according to ISO 9276-2 (2014) of 500- 1500 nm;
wherein the comparative tracking index (CTI) of the thermoplastic polymer composition is 600 V or higher as determined in accordance with ASTM D3638;
wherein the weight percentages are based on the total weight of the thermoplastic polymer composition.

In another embodiment, the thermoplastic polymer composition comprises:
54-95.9 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres;
0.1-1.0 wt.% of a mineral filler component;
wherein the polyethylene is a low-density polyethylene having a density of 918 - 922 kg/m³ as determined in accordance with ISO 1183-1 (2012), method A, having a melt mass-flow rate determined at 190 °C under a load of 2.16 kg of ≥ 20.0 and ≤ 25.0 g/10 min, and a melt mass-flow rate determined at 190 °C under a load of 5.0 kg of ≥ 70.0 and ≤ 85.0 g/10 min; wherein the alkyl acrylate based copolymer is an ethylene ethyl acrylate copolymer;
wherein the mineral filler component is selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof, having an average particle size determined as D50 according to ISO 9276-2 (2014) of 500- 1500 nm;
wherein the pyro/polyphosphate is sodium hydrogen pyrophosphate;
wherein the comparative tracking index (CTI) of the thermoplastic polymer composition is 600 V or higher as determined in accordance with ASTM D3638;
wherein the weight percentages are based on the total weight of the thermoplastic polymer composition.

In another embodiment, the thermoplastic polymer composition optionally comprises additives selected from fillers, UV stabilizers, heat stabilizers, antistatic agents, pigments, mold release agents, flow agents and combinations thereof present in an amount ≥ 0 and ≤2.5 wt. % based on the total weight of the thermoplastic polymer composition

The present invention in further embodiments also relates to an article of manufacture comprising the thermoplastic polymer composition comprises:
55-96 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres and;
0-1.0 wt. % of a mineral filler;
wherein the weight percentages are based on the total weight of the thermoplastic polymer composition.

Particularly, the present invention in further embodiments also relates to an article of manufacture selected from electrical and electronic connectors, automotive connectors, battery housings, computer fans, lighting switches, sockets, solar apparatus, electrical junction boxes, electrical vehicle chargers, outdoor electrical enclosures, smart meter enclosures and smart grid power nodes, comprising the thermoplastic polymer composition:
55-96 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres and;
0-1.0 wt. % of a mineral filler;
wherein the weight percentages are based on the total weight of the thermoplastic polymer composition.

Particularly, the present invention in further embodiments also relates to an article of manufacture selected from electrical and electronic connectors, automotive connectors, battery housings, computer fans, lighting switches, sockets, solar apparatus, electrical junction boxes, electrical vehicle chargers, outdoor electrical enclosures, smart meter enclosures and smart grid power nodes, comprising the thermoplastic polymer composition:
54-95.9 wt.% of poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene and;
2.5-30 wt.% of glass fibres;
0.1-1.0 wt.% of a mineral filler component;
wherein the weight percentages are based on the total weight of the thermoplastic polymer composition.

In a further embodiment, the present invention also relates to an article of manufacture selected from electrical and electronic connectors, automotive connectors, battery housings, computer fans, lighting switches, sockets, solar apparatus, electrical junction boxes, electrical vehicle chargers, outdoor electrical enclosures, smart meter enclosures and smart grid power nodes, comprising the thermoplastic polymer composition:
55-96 wt.% of poly(butylene terephthalate) comprising 50-80 wt.% of the first poly(butylene terephthalate) and 20-50 wt.% of the second poly(butylene terephthalate), with regard to the total weight of the poly(butylene terephthalate);
0.5-5.0 wt.% of a pyro/polyphosphate selected from metal pyrophosphates, metal polyphosphates, metal acid pyrophosphates, metal acid polyphosphates or a combination thereof;
0.5-5.0 wt.% of an alkyl acrylate based copolymer;
0.5-5.0 wt.% of polyethylene;
2.5-30 wt.% of glass fibres and;
0-1.0 wt. % of a mineral filler;
wherein the polyethylene is a low-density polyethylene having a density of 918 - 922 kg/m³ as determined in accordance with ISO 1183-1 (2012), method A, having a melt mass-flow rate determined at 190°C under a load of 2.16 kg of ≥ 20.0 and ≤ 25.0 g/10 min, and a melt mass-flow rate determined at 190°C under a load of 5.0 kg of ≥ 70.0 and ≤ 85.0 g/10 min; wherein the weight percentages are based on the total weight of the thermoplastic polymer composition.

Specific examples demonstrating some of the embodiments of the invention are included below. The examples are for illustrative purposes only and are not intended to limit the invention. It should be understood that the embodiments and the aspects disclosed herein are not mutually exclusive and such aspects and embodiments can be combined in any way. Those of ordinary skill in the art will readily recognize parameters that can be changed or modified to yield essentially the same results.

A number of samples of polymer compositions were produced using the materials as listed in Table I.

**Table I: Materials**

| | |
|---|---|
| PBT1 | SABIC VX195-1001, intrinsic viscosity 0.5 - 1.0, target 0.75 dL/g |
| PBT2 | SABIC VX315-1001, intrinsic viscosity 1.0 - 1.5, target 1.27 dL/g |
| PE | SABIC LDPE, density 918 - 922 target 920 kg/m³ |
| EEA | DUPONT ELVALOY Specific gravity, 0.923 - 0.933 g/cc, EA Content 13- 21%, MFI4 - 8 g/10' |
| SAPP | BUDENHEIM BUDAL SAPP, P2O5 content 62 - 66%, pH 3 - 5 |
| GF | NEG Glass fiber, average fiber diameter 10 µm, average fiber length 4.5 mm |
| AO | Tetrakis methylene (3, 5-di-tert-butyl-4-hydroxyhydrocinnamate) methane, CAS Reg. No. 6683-19-8 |
| Talc | IMERYS Jetfine talcum, average particle size D50 of 1.0 µm |
| CB | Carbon black, CAS Reg. No. 1333-86-4 |

Compositions were formed by melt mixing the components. Extrusion was carried out in a 25 mm twin screw extruder. The extruder was set at about 240-260 °C. The blends were run at approximately 300 rotations per minute (rpm) under vacuum. Compositions were made in a one pass method. The extrudate was cooled, pelletized, and dried at 120 °C. Test samples were injection molded at a set temperature of 250-270 °C and mold temperature of 50-80 °C.

The samples were produced according to the formulations presented in Table II and Table III.

**Table II:**

| | **CS.1** | **CS. 2** | **CS. 3** | **CS. 4** | **CS. 5** | **CS. 6** | **CS. 7** | **CS. 8** | **CS. 9** | **CS. 10** | **Ex. 1** | **Ex. 2** | **Ex. 3** | **Ex. 4** | **Ex. 5** |
|---|---|---|---|---|---|---|---|---|---|---|---|---|---|---|---|
| **PBT 1** | 59.54 | 60.44 | 57.94 | 55.44 | 56.24 | 54.74 | 57.94 | 55.44 | 56.24 | 54.74 | 55.44 | 50.44 | 52.94 | 52.94 | 52.94 |
| **PBT 2** | 29.90 | 25.00 | 25.00 | 25.00 | 28.20 | 27.40 | 25.00 | 25.00 | 28.20 | 27.40 | 25.00 | 25.00 | 25.00 | 25.00 | 25.00 |
| **PE** | - | 4.00 | 4.00 | 4.00 | - | - | 4.00 | 4.00 | - | - | 4.00 | 4.00 | 4.00 | 4.00 | 4.00 |
| **EEA** | - | - | 2.50 | 5.00 | 5.00 | 5.00 | - | - | - | - | 2.50 | 5.00 | 2.50 | 5.00 | 4.25 |
| **SAPP** | - | - | - | - | - | - | 2.50 | 5.00 | 5.00 | 5.00 | 2.50 | 5.00 | 5.00 | 2.50 | 3.25 |
| **GF** | 10.00 | 10.00 | 10.00 | 10.00 | 10.00 | 10.00 | 10.00 | 10.00 | 10.00 | 10.00 | 10.00 | 10.00 | 10.00 | 10.00 | 10.00 |
| **AO** | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 |
| **Talc** | 0.2 | 0.2 | 0.2 | 0.2 | 0.2 | 2.5 | 0.2 | 0.2 | 0.2 | 2.5 | 0.2 | 0.2 | 0.2 | 0.2 | 0.2 |
| **CB** | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |

**Table III:**

| | **CS. 11** | **CS. 12** | **CS. 13** | **Ex. 6** | **CS. 14** | **Ex. 7** | **CS. 15** | **Ex. 8** | **CS. 16** | **Ex. 9** |
|---|---|---|---|---|---|---|---|---|---|---|
| **PBT 1** | 70.44 | 62.94 | 67.94 | 60.44 | 65.44 | 57.94 | 50.44 | 42.94 | 40.44 | 32.94 |
| **PBT 2** | 25.00 | 25.00 | 25.00 | 25.00 | 25.00 | 25.00 | 25.00 | 25.00 | 25.00 | 25.00 |
| **PE** | 4.00 | 4.00 | 4.00 | 4.00 | 4.00 | 4.00 | 4.00 | 4.00 | 4.00 | 4.00 |
| **EEA** | - | 4.25 | - | 4.25 | - | 4.25 | - | 4.25 | - | 4.25 |
| **SAPP** | - | 3.25 | - | 3.25 | - | 3.25 | - | 3.25 | - | 3.25 |
| **GF** | - | - | 2.50 | 2.50 | 5.00 | 5.00 | 20.00 | 20.00 | 30.00 | 30.00 |
| **AO** | 0.06 | 0.06 | 0.06 | 0.06 | 0.06 | 0.06 | 0.06 | 0.06 | 0.06 | 0.06 |
| **Talc** | 0.20 | 0.20 | 0.20 | 0.20 | 0.20 | 0.20 | 0.20 | 0.20 | 0.20 | 0.20 |
| **CB** | 0.30 | 0.30 | 0.30 | 0.30 | 0.30 | 0.30 | 0.30 | 0.30 | 0.30 | 0.30 |

The values provided in Table II and Table III are the weight percent of the materials present in the formulations. Samples marked with CS represent the formulations prepared for providing a comparative analysis.

Material properties were determined for the thermoplastic polymer compositions provided in Table II and Table III, the results of which are indicated in Table IV and Table V.

**Table IV:**

| Test description | **CS.1** | **CS. 2** | **CS. 3** | **CS. 4** | **CS. 5** | **CS. 6** | **CS. 7** | **CS. 8** | **CS. 9** | **cs. 10** | **Ex. 1** | **Ex. 2** | **Ex. 3** | **Ex. 4** | **Ex. 5** |
|---|---|---|---|---|---|---|---|---|---|---|---|---|---|---|---|
| CTI (V) | II (250-399) | II (250-399) | II (250-399) | II (250-399) | II (250-399) | II (250-399) | II (250-399) | I (400-599) | I (400-599) | II (250-399) | 0 (>600) | 0 (>600) | 0 (>600) | 0 (>600) | 0 (>600) |
| Flexural Modulus - ISO 178 (Mpa) | 4328 | 4102 | 4328 | 3703 | 3788 | 4066 | 3829 | 4089 | 4478 | 4935 | 3734 | 3677 | 3772 | 3752 | 3662 |
| MVR 250 °C/2.16kg - ISO 1133 (cm³/10 min) | 28 | 27 | 24 | 24 | 27 | 21 | 22 | 21 | 23 | 20 | 21 | 20 | 20 | 20 | 25 |
| Izod Notched Impact - ISO 180 (kJ/m2) | 4.0 | 4.6 | 4.7 | 5.1 | 4.5 | 5.2 | 4.5 | 4.9 | 4.2 | 4.3 | 5.2 | 5.5 | 5.1 | 5.5 | 4.2 |
| Izod Impact - ISO 180 (kJ/m2) | 19 | 26 | 26 | 32 | 31 | 39 | 30 | 33 | 23 | 29 | 30 | 37 | 33 | 36 | 34 |
| Tensile Nominal Stain at Break - ISO 527 (%) | 2.7 | 3.5 | 3.5 | 3.4 | 3.5 | 3.3 | 3.3 | 3.3 | 3.0 | 3.1 | 3.4 | 3.4 | 3.3 | 3.4 | 3.2 |
| HDT-1.8MPA - flat - ISO 75 (°C) | 192 | 184 | 167 | 168 | 188 | 180 | 180 | 188 | 186 | 188 | 180 | 184 | 181 | 180 | 186 |

**Table V:**

| Test description | **CS. 11** | **CS. 12** | **CS. 13** | **Ex. 6** | **CS. 14** | **Ex. 7** | **CS. 15** | **Ex. 8** | **CS. 16** | **Ex. 9** |
|---|---|---|---|---|---|---|---|---|---|---|
| CTI (V) | 0 (>600) | 0 (>600) | I (400-599) | 0 (>600) | I (400-599) | 0 (>600) | II (250-399) | 0 (>600) | II (250-399) | 0 (>600) |
| Flexural Modulus - ISO 178 (Mpa) | 2329 | 2154 | 2582 | 2438 | 2981 | 2843 | 5772 | 5595 | 8115 | 7700 |
| MVR 250 °C/2.16kg - ISO 1133 (cm³/10 min) | 56 | 47 | 41 | 35 | 34 | 27 | 14 | 11 | 8 | 6 |
| Izod Notched Impact - ISO 180 (kJ/m2) | 3.1 | 2.3 | 2.4 | 3.6 | 3.1 | 3.2 | 7.4 | 8.0 | 10.1 | 9.8 |
| Izod Impact - ISO 180 (kJ/tn2) | 81 | 57 | 23 | 32 | 23 | 27 | 51 | 48 | 62 | 51 |
| Tensile Nominal Stain at Break - ISO 527 (%) | 13.3 | 11.4 | 4.1 | 4.5 | 3.8 | 3.7 | 3.1 | 2.9 | 2.9 | 2.8 |
| HDT - 1.8MPA - flat - ISO 75-2 (°C) | 58 | 60 | 79 | 86 | 129 | 130 | 200 | 197 | 205 | 202 |

HDT is the heat deflection temperature as determined in accordance with ISO 75-2 (2013), method B, expressed in °C.

MVR is the melt volume flow rate as determined in accordance with ISO 1133-1 (2011) at 250 °C at a load of 2.16 kg, expressed in cm³/10 min.

Izod impact values were measured at room temperature on 4.0 millimeter thick bars as per ISO 180. The standard specimen for ISO is a Type 1A multipurpose specimen with the end tabs cut off. The resulting test sample measures 80 × 10 × 4 mm. The depth under the notch of the specimen is 8mm. Samples were tested at room temperature. Results are in kJ/m².

Flexural Modulus is determined in accordance with ISO 178, expressed in MPa.

Tensile Nominal Stain at Break is determined in accordance with ISO 527, expressed in %.

Electrical tracking resistance tests were performed on a 3 mm square plaque (6×6 cm) in accordance with the ASTM D-3638. The test can be started at any given voltage. At each voltage, 5 specimens are tested and the average number of drops is recorded. The test is performed at (at least) 4 different voltages, where there should be at least two data points with an average number of drops higher than 50 and two data points with an average number of drops lower than 50. A voltage extrapolation to 50 drops is made, and based on this voltage (V_{ASTM}) a Performance Level Categories (PLC) class is assigned. This assignment is provided according to the table below. The CTI rating of a polymer indicates how resistant the polymeric material is to electrical tracking at certain voltages. CTI ratings range from CTI-0 to CTI-5 with a CTI-1 rating indicating that a polymer is more resistant to electrical tracking than a polymer with a CTI rating of CTI-3.

| V_{ASTM} | PLC |
|---|---|
| <100 | 5 |
| 100-174 | 4 |
| 175-249 | 3 |
| 250-399 | 2 |
| 400-599 | 1 |
| ≥600 | 0 |

The inventive examples presented above demonstrate that the thermoplastic polymer composition prepared according to the present invention provides an excellent balance of electrical tracking resistance, good melt flow properties, a high heat deflection temperature, a high impact strength and a high tensile strain at break.

## Claims

1. A thermoplastic polymer composition, comprising:
between 54-96 wt.% of poly(butylene terephthalate);
between 0.5-5.0 wt.% of a pyro/polyphosphate selected from metal pyrophosphates,
metal polyphosphates, metal acid pyrophosphates, metal acid polyphosphates or a combination thereof;
between 0.5-5.0 wt.% of an alkyl acrylate based copolymer;
between 0.5-5.0 wt.% of polyethylene;
between 2.5-30 wt.% of glass fibres and;
between 0-1.0 wt.% of a mineral filler;
wherein the weight percentages are based on the total weight of the thermoplastic polymer composition.

2. The thermoplastic polymer composition according to claim 1, wherein the comparative tracking index (CTI) of the thermoplastic polymer composition is 600 V or higher as determined in accordance with ASTM D-3638.

3. The thermoplastic polymer composition according to any one of claims 1-2 comprises 0.1-1.0 wt.% of a mineral filler component selected from aluminum silicate, calcium carbonate, calcium sulfate dihydrate, calcium sulfate hemihydrate, calcinated clay, calcium silicate, clay, crushed quartz, diatomaceous earth, fly ash, kaolin, limestone, mica, silicates, talc, titanium dioxide, wollastonite, zirconium oxide, zirconium silicate, and combinations thereof, having an average particle size determined as D50 according to ISO 9276-2 (2014) of 500 - 1500 nm with regard to the total weight of the thermoplastic polymer composition.

4. The thermoplastic polymer composition according to claim 3, wherein the mineral filler component comprises talc.

5. The thermoplastic polymer composition according to any one of claims 1-4 wherein the poly(butylene terephthalate) comprises a first poly(butylene terephthalate) and a second poly(butylene terephthalate), wherein the first poly(butylene terephthalate) has an intrinsic viscosity of 0.5 - 1.0 dL/g and the second poly(butylene terephthalate) has an intrinsic viscosity of 1.0 - 1.5 dL/g, wherein the intrinsic viscosity is determined in accordance with ASTM D2857-95 (2007).

6. The thermoplastic polymer composition according to claim 5, wherein the poly(butylene terephthalate) comprises 50-80 wt.% of the first poly(butylene terephthalate), with regard to the total weight of the poly(butylene terephthalate).

7. The thermoplastic polymer composition according to claim 5, wherein the poly(butylene terephthalate) comprises 20-50 wt.% of the second poly(butylene terephthalate), with regard to the total weight of the poly(butylene terephthalate).

8. The thermoplastic polymer composition according to claim 1-7, wherein the polyethylene is selected from a high-density polyethylene having a density of 940 - 970 kg/m³, a linear low-density polyethylene having a density of 915 - 939 kg/m³, or a low-density polyethylene having a density of 910 - 940 kg/m³, wherein the density is determined in accordance with ISO 1183-1 (2012), method A.

9. The thermoplastic polymer composition according to any one of claims 1-8 wherein the polyethylene is a low-density polyethylene having a density of 918 - 922 kg/m³ as determined in accordance with ISO 1183-1 (2012), method A.

10. The thermoplastic polymer composition according to any one of claims 1-9, wherein the glass fibre has an average fibre diameter of 5.0 - 15.0 µm, and an average fibre length of 3.0 - 5.0 mm.

11. The thermoplastic polymer composition according to any one of claims 1-10, wherein the alkyl acrylate based copolymer is an ethylene ethyl acrylate copolymer.

12. The thermoplastic polymer composition according to any one of claims 1-11, wherein the pyro/polyphosphate is sodium hydrogen pyrophosphate.

13. The thermoplastic polymer composition according to any one of claims 1-12, wherein the resin composition optionally comprises additives selected from fillers, UV stabilizers, heat stabilizers, antistatic agents, pigments, mold release agents, flow agents and combinations thereof present in an amount ≥ 0 and ≤2.5 wt. % based on the total weight of the thermoplastic polymer composition.

14. An article of manufacture comprising the thermoplastic polymer composition of any of claims 1-13, wherein the article may be selected from electrical and electronic connectors, automotive connectors, battery housings, computer fans, lighting switches, sockets, solar apparatus, electrical junction boxes, electrical vehicle chargers, outdoor electrical enclosures, smart meter enclosures and smart grid power nodes.

15. A method of manufacture of an article, comprising molding, extruding, or casting the thermoplastic polymer composition of any one of claims 1 to 13 to form the article.

## Patentansprüche

1. Thermoplastische Polymerzusammensetzung, umfassend:
zwischen 54 und 96 Gew.-% Poly(butylenterephthalat);
zwischen 0,5 und 5,0 Gew.-% eines Pyro/Polyphosphats, ausgewählt aus Metallpyrophosphaten, Metallpolyphosphaten, Metallsäurepyrophosphaten, Metallsäurepolyphosphaten oder einer Kombination davon;
zwischen 0,5 und 5,0 Gew.-% eines Copolymers auf Alkylacrylatbasis;
zwischen 0,5 und 5,0 Gew.-% Polyethylen;
zwischen 2,5 und 30 Gew.-% Glasfasern und;
zwischen 0 und 1,0 Gew.-% eines mineralischen Füllstoffs;
wobei Gew.-% und ppm auf dem Gesamtgewicht der Zusammensetzung basieren.

2. Thermoplastische Polymerzusammensetzung nach Anspruch 1, wobei die Kriechstromfestigkeit (Comparative Tracking Index, CTI) der thermoplastischen Polymerzusammensetzung 600 V oder mehr beträgt, bestimmt gemäß ASTM D-3638.

3. Thermoplastische Polymerzusammensetzung nach einem der Ansprüche 1 bis 2 umfassend 0,1 bis 1,0 Gew.-% einer mineralischen Füllstoffkomponente, ausgewählt aus Aluminiumsilikat, Calciumcarbonat, Calciumsulfat-Dihydrat, Calciumsulfat-Hemihydrat, kalziniertem Ton, Calciumsilicat, Ton, zerkleinertem Quarz, Kieselgur, Flugasche, Kaolin, Kalkstein, Glimmer, Silikaten, Talk, Titandioxid, Wollastonit, Zirkoniumoxid, Zirkoniumsilikat und Kombinationen davon, mit einer durchschnittlichen Partikelgröße, bestimmt als D50 gemäß ISO 9276-2 (2014) von 500 bis 1500 nm bezogen auf das Gesamtgewicht der thermoplastischen Polymerzusammensetzung.

4. Thermoplastische Polymerzusammensetzung nach Anspruch 3, wobei die mineralische Füllstoffkomponente Talk umfasst.

5. Thermoplastische Polymerzusammensetzung nach einem der Ansprüche 1 bis 4, wobei das Poly(butylenterephthalat) ein erstes Poly(butylenterephthalat) und ein zweites Poly(butylenterephthalat) umfasst, wobei das erste Poly(butylenterephthalat) eine Grenzviskosität von 0,5 bis 1,0 d!/g aufweist und das zweite Poly(butylenterephthalat) eine Grenzviskosität von 1,0 bis 1,5 dl/g aufweist, wobei die Grenzviskosität gemäß ASTM D2857-95 (2007) bestimmt wird.

6. Thermoplastische Polymerzusammensetzung nach Anspruch 5, wobei das Poly(butylenterephthalat) 50 bis 80 Gew.-% des ersten Poly(butylenterephthalats) umfasst, bezogen auf das Gesamtgewicht des Poly(butylenterephthalats).

7. Thermoplastische Polymerzusammensetzung nach Anspruch 5, wobei das Poly(butylenterephthalat) 20 bis 50 Gew.-% des zweiten Poly(butylenterephthalats) umfasst, bezogen auf das Gesamtgewicht des Poly(butylenterephthalats).

8. Thermoplastische Polymerzusammensetzung nach Anspruch 1 bis 7, wobei das Polyethylen aus einem Polyethylen hoher Dichte mit einer Dichte von 940 bis 970 kg/m³, einem linearen Polyethylen niedriger Dichte mit einer Dichte von 915 bis 939 kg/m³ oder einem Polyethylen niedriger Dichte mit einer Dichte von 910 bis 940 kg/m³ ausgewählt ist, wobei die Dichte gemäß ISO 1183-1 (2012), Verfahren A bestimmt wird.

9. Thermoplastische Polymerzusammensetzung nach einem der Ansprüche 1 bis 8, wobei es sich bei dem Polyethylen um ein Polyethylen niedriger Dichte mit einer Dichte von 918 bis 922 kg/m³ handelt, bestimmt gemäß ISO 1183-1 (2012), Verfahren A.

10. Thermoplastische Polymerzusammensetzung nach einem der Ansprüche 1 bis 9, wobei die Glasfaser einen durchschnittlichen Faserdurchmesser von 5,0 bis 15,0 µm und eine durchschnittliche Faserlänge von 3,0 bis 5,0 mm aufweist.

11. Thermoplastische Polymerzusammensetzung nach einem der Ansprüche 1 bis 10, wobei es sich bei dem Copolymer auf Alkylacrylatbasis um ein Ethylen-Ethylacrylat-Copolymer handelt.

12. Thermoplastische Polymerzusammensetzung nach einem der Ansprüche 1 bis 11, wobei es sich bei dem Pyro/Polyphosphat um Natriumhydrogenpyrophosphat handelt.

13. Thermoplastische Polymerzusammensetzung nach einem der Ansprüche 1 bis 12, wobei die Harzzusammensetzung wahlweise Additive ausgewählt aus Füllstoffen, UV-Stabilisatoren, Wärmestabilisatoren, Antistatikmitteln, Pigmenten, Formtrennmitteln, Fließmitteln und Kombinationen davon umfasst, die in einer Menge von ≥ 0 und ≤ 2,5 Gew.-%, bezogen auf das Gesamtgewicht der thermoplastischen Polymerzusammensetzung, vorhanden sind.

14. Herstellungsgegenstand umfassend die thermoplastische Polymerzusammensetzung nach einem der Ansprüche 1 bis 13, wobei der Gegenstand aus elektrischen und elektronischen Verbindern, Fahrzeugverbindern, Batteriegehäusen, Computerlüftern, Lichtschaltern, Anschlussdosen, Solarvorrichtungen, elektrischen Anschlusskästen, Ladegeräten für Elektrofahrzeuge, elektrische Außengehäuse, Smart-Meter-Gehäuse und Smart-Grid-Stromknoten ausgewählt sein kann.

15. Verfahren zur Herstellung eines Gegenstands, umfassend Formen, Extrudieren oder Gießen der thermoplastischen Polymerzusammensetzung nach einem der Ansprüche 1 bis 13, um den Gegenstand zu bilden.

## Revendications

1. Composition polymère thermoplastique, comprenant :
entre 54 et 96 % en poids de poly(téréphtalate de butylène) ;
entre 0,5 et 5,0 % en poids d'un pyro/polyphosphate choisi parmi les pyrophosphates métalliques, les polyphosphates métalliques, les pyrophosphates acides métalliques, les polyphosphates acides métalliques ou une combinaison de ceux-ci ;
entre 0,5 et 5,0 % en poids d'un copolymère à base d'acrylate d'alkyle ;
entre 0,5 et 5,0 % en poids de polyéthylène ;
entre 2,5 et 30 % en poids de fibres de verre et ;
entre 0 et 1,0 % en poids d'une charge minérale ;
dans laquelle les pourcentages en poids sont basés sur le poids total de la composition polymère thermoplastique.

2. Composition polymère thermoplastique selon la revendication 1, dans laquelle l'indice de cheminement comparatif (CTI) de la composition polymère thermoplastique est supérieur ou égal à 600 V, tel que déterminé conformément à la norme ASTM D-3638.

3. Composition polymère thermoplastique selon l'une quelconque des revendications 1 et 2, comprenant 0,1 à 1,0 % en poids d'un composant de charge minérale choisi parmi le silicate d'aluminium, le carbonate de calcium, le dihydrate de sulfate de calcium, l'hémihydrate de sulfate de calcium, une argile calcinée, le silicate de calcium, une argile, le quartz broyé, la terre de diatomées, des cendres volantes, le kaolin, le calcaire, le mica, les silicates, le talc, le dioxyde de titane, la wollastonite, l'oxyde de zirconium, le silicate de zirconium et leurs combinaisons, présentant une taille de particules moyenne déterminée comme D50 selon la norme ISO 9276-2 (2014) de 500 à 1500 nm par rapport au poids total de la composition polymère thermoplastique.

4. Composition polymère thermoplastique selon la revendication 3, dans laquelle le composant de charge minérale comprend du talc.

5. Composition polymère thermoplastique selon l'une quelconque des revendications 1 à 4, dans laquelle le poly(téréphtalate de butylène) comprend un premier poly(téréphtalate de butylène) et un second poly(téréphtalate de butylène), dans laquelle le premier poly(téréphtalate de butylène) présente une viscosité intrinsèque de 0,5 à 1,0 dL/g et le second poly(téréphtalate de butylène) présente une viscosité intrinsèque de 1,0 à 1,5 dL/g, dans laquelle la viscosité intrinsèque est déterminée conformément à la norme ASTM D2857-95 (2007).

6. Composition polymère thermoplastique selon la revendication 5, dans laquelle le poly(téréphtalate de butylène) comprend 50 à 80 % en poids du premier poly(téréphtalate de butylène), par rapport au poids total du poly(téréphtalate de butylène).

7. Composition polymère thermoplastique selon la revendication 5, dans laquelle le poly(téréphtalate de butylène) comprend 20 à 50 % en poids du second poly(téréphtalate de butylène), par rapport au poids total du poly(téréphtalate de butylène).

8. Composition polymère thermoplastique selon les revendications 1 à 7, dans laquelle le polyéthylène est choisi parmi un polyéthylène haute densité présentant une densité de 940 à 970 kg/m³, un polyéthylène linéaire basse densité présentant une densité de 915 à 939 kg/m³, ou un polyéthylène basse densité présentant une densité de 910 à 940 kg/m³, dans laquelle la densité est déterminée conformément à la norme ISO 1183-1 (2012), méthode A.

9. Composition polymère thermoplastique selon l'une quelconque des revendications 1 à 8, dans laquelle le polyéthylène est un polyéthylène basse densité présentant une densité de 918 à 922 kg/m³ telle que déterminée conformément à la norme ISO 1183-1 (2012), méthode A.

10. Composition polymère thermoplastique selon l'une quelconque des revendications 1 à 9, dans laquelle la fibre de verre présente un diamètre moyen de fibre de 5,0 à 15,0 µm et une longueur moyenne de fibre de 3,0 à 5,0 mm.

11. Composition polymère thermoplastique selon l'une quelconque des revendications 1 à 10, dans laquelle le copolymère à base d'acrylate d'alkyle est un copolymère d'éthylène et d'acrylate d'éthyle.

12. Composition polymère thermoplastique selon l'une quelconque des revendications 1 à 11, dans laquelle le pyro/polyphosphate est l'hydrogénopyrophosphate de sodium.

13. Composition polymère thermoplastique selon l'une quelconque des revendications 1 à 12, dans laquelle la composition de résine comprend facultativement des additifs choisis parmi des charges, des stabilisants UV, des stabilisants thermiques, des agents antistatiques, des pigments, des agents de démoulage, des agents d'écoulement et leurs combinaisons présents en un quantité ≥ 0 et ≤ 2,5 % en poids par rapport au poids total de la composition polymère thermoplastique.

14. Article de fabrication comprenant la composition polymère thermoplastique selon l'une des revendications 1 à 13, dans lequel l'article peut être choisi parmi des connecteurs électriques et électroniques, des connecteurs automobiles, des boîtiers de batterie, des ventilateurs d'ordinateur, des commutateurs d'éclairage, des prises, des appareils solaires, des boîtes de jonction électriques, des chargeurs de véhicules électriques, des coffrets électriques extérieurs, des coffrets de compteurs intelligents et des noeuds d'alimentation de réseau intelligent.

15. Procédé de fabrication d'un article, comprenant le moulage, l'extrusion ou le coulage de la composition polymère thermoplastique selon l'une quelconque des revendications 1 à 13 pour former l'article.
